# EUROPÄISCHE PATENTSCHRIFT

(11) **EP 3 436 313 B1**
(45) Veröffentlichungstag und Bekanntmachung des Hinweises auf die Patenterteilung: **11.12.2019**
(21) Anmeldenummer: 17719708.4
(22) Anmeldetag: 24.03.2017
(51) Int. Cl.: B60R 21/26

(54) **RÜCKSTOSSVENTIL FÜR ZÜNDKAPSEL FÜR INSASSEN-RÜCKHALTESYSTEME**
RECOIL VALVE FOR IGNITION CAPSULE FOR OCCUPANT RESTRAINT SYSTEMS
SOUPAPE DE RECUL POUR DÉTONATEUR DE SYSTÈMES DE RETENUE DES OCCUPANTS

(30) Priorität: 31.03.2016 DE 102016004378
(43) Veröffentlichungstag der Anmeldung: 06.02.2019
(73) Patentinhaber: EMS-PATVAG s.v.o., 68333 Brankovice (CZ)
(72) Erfinder: DÜRSCHINGER, Günter, 90768 Fürth (DE); DÜRSCHINGER, Elisabeth, 90768 Fürth (DE)
(74) Vertreter: Pfenning, Meinig & Partner mbB
(86) Internationale Anmeldenummer: PCT/IB2017/000427
(87) Internationale Veröffentlichungsnummer: WO 2017/168248

(56) Entgegenhaltungen:
- EP-A1- 0 604 001
- DE-A1- 4 242 793
- DE-A1- 19 536 321
- US-B1- 8 186 712

## Beschreibung

Die Erfindung betrifft ein Rückstoßventil für eine Zündkapsel für den Gasgenerator eines Insassen-Rückhaltesystems in einem Kraftfahrzeug.

Zu den am häufigsten eingesetzten Insassen-Rückhaltesystemen gehören das aufblasbare Aufprallschutzkissen (Airbag). Die Rückhaltesysteme benötigen einen Gasgenerator, dessen Treibladung im Falle einer Fahrzeugkollision von einer Zündkapsel zur Explosion gebracht wird. Die hierdurch freigesetzte Gasmenge bläst den Airbag auf.

Zündkapseln für Airbag-Gasgeneratoren sind nach dem Stand der Technik bekannt (Patent 10 2014 016 923).

Das Bestreben nach immer kürzeren Auslösezeiten der Airbags bei einem Unfall hat zur Entwicklung von noch hochexplosiveren Zündmittel geführt mit erhöhter Sprengkraft.

In der Patentanmeldung Aktenzeichen 10 2015 014 124.4 ist eine Zündkapsel beschrieben, wobei alternativ zusätzlich eine Verstärkerladung vorgesehen ist, wodurch die Aufsprengkraft zur Freisetzung der Gasmenge im Gasgenerator noch wesentlich erhöht wird.

Die Patentschrift US8186712 offenbart ein Rückstoßventil insbesondere für die Zündkapsel für den Gasgenerator eines Insassen-Rückhaltesystems in einem Kraftfahrzeug mit einem topfförmigen Oberteil mit einer Bohrung einer Membranfeder mit einem kegeligen Ventilsitz.

Dem erfindungsgemäßen Rückstoßventil liegt die Aufgabe zugrunde eine Relativbewegung der Glasisolierung oder des Kontaktstiftes in der Zündkapsel durch die freigesetzte Gasmenge oder beim Zündvorgang zu vermeiden.

Diese Aufgabe wird durch die Merkmale des Anspruchs 1 gelöst.

Die Erfindung wird im folgendem anhand von Ausführungsbeispielen näher erläutert:

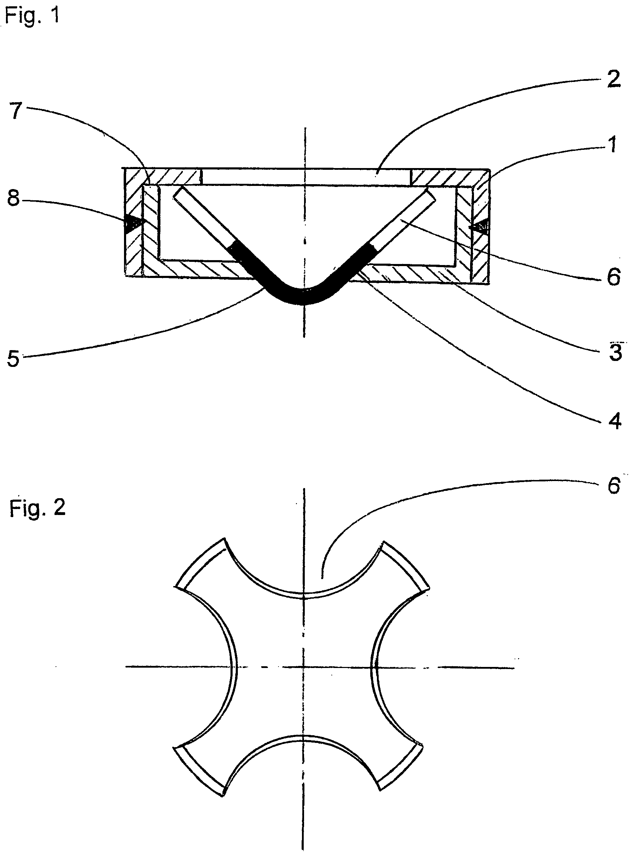

Fig. 1 zeigt schematisch einen Schnitt durch das erfindungsgemäße Rückstoßventil. Das Rückstoßventil verfügt über ein topfförmiges Oberteil 1 mit einer Bohrung 2 einer Membranfeder 5 mit einem kegeligen Ventilsitz 4 und mindestens 3 Aussparungen 6 am Umfang und ein topfförmiges Unterteil 3 mit einem kegeligen Ventilsitz 4, wobei das mit der Membranfeder 5 bestückte Unterteil 3 nach dem Einsetzen in das Oberteil 1 gegen Anschlag 7 mit dem Oberteil 1 mit einer umlaufenden Schweißnaht 8 fest verbunden ist.
Fig. 2 zeigt die Membranfeder mit 4 Aussparungen am Umfang.

## Patentansprüche

1. Rückstoßventil insbesondere für die Zündkapsel für den Gasgenerator eines Insassen-Rückhaltesystems in einem Kraftfahrzeug mit einem topfförmigen Oberteil (1) mit einer Bohrung (2) einer Membranfeder (5) mit einem kegeligen Ventilsitz (4) und mindestens 3 Aussparungen (6) am Umfang und einem topfförmigen Unterteil (3) mit einem kegeligen Ventilsitz (4) wobei das mit der Membranfeder (5) bestückte Unterteil (3) nach dem Einsetzen in das Oberteil (1) gegen Anschlag (7) mit dem Oberteil (1) mit einer umlaufenden Schweißnaht (8) fest verbunden ist.

2. Rückstoßventil nach Anspruch 1 **dadurch gekennzeichnet, dass** die Schweißnaht (8) entfällt und alternativ der überstehende Rand des Oberteil (1) umgebördelt ist (nicht dargestellt).

3. Rückstoßventil nach einem der vorherigen Ansprüche **dadurch gekennzeichnet, dass** das Rückstoßventil in der Zündkapsel mit oder ohne Verstärkerladung eingebaut ist (nicht dargestellt).

4. Rückstoßventil nach einem der vorherigen Ansprüche **dadurch gekennzeichnet, dass** die Membranfeder (5) im Gehäuse der Verstärkerladung funktionstüchtig eingebaut ist (nicht dargestellt).

## Claims

1. Recoil valve, in particular for the trigger capsule for the gas generator of a passenger restraint system in an automotive vehicle having a pot-shaped upper part (1) with a boring (2), a diaphragm spring (5) with a conical valve seat (4) and at least 3 recesses (6) on the circumference and a pot-shaped lower part (3) with a conical valve seat (4), the lower part (3) equipped with the diaphragm spring (5) being securely connected to the upper part (1) by a circumferential weld seam (8), after insertion into the upper part (1) against limit stop (7).

2. Recoil valve according to claim 1, **characterised in that** the weld seam (8) is omitted and alternatively the protruding edge of the upper part (1) is flanged (not illustrated).

3. Recoil valve according to one of the preceding claims, **characterised in that** the recoil valve is incorporated in the trigger capsule with or without booster charge (not illustrated).

4. Recoil valve according to one of the preceding claims, **characterised in that** the diaphragm spring (5) is incorporated functionally in the housing of the booster charge (not illustrated).

## Revendications

1. Soupape anti-recul, plus particulièrement pour l'amorce pour le générateur de gaz d'un système de retenue de passager d'un véhicule automobile avec une partie supérieure en forme de cloche (1) avec un perçage (2) d'un ressort à membrane (5) avec un siège de soupape conique (4) et au moins 3 évidements (6) sur la circonférence et une partie inférieure en forme de cloche (3) avec un siège de soupape conique (4), la partie inférieure (3) équipé du ressort à membrane (5) étant reliée fermement, après l'insertion dans la partie supérieure (1) contre une butée (7), avec la partie supérieure (1) avec un cordon de soudure circulaire (8).

2. Soupape anti-recul selon la revendication 1, **caractérisée en ce que** le cordon de soudure (8) n'existe pas et, en variante, le bord en saillie de la partie supérieure (1) est rabattu (non représenté).

3. Soupape anti-recul selon l'une des revendications précédentes, **caractérisée en ce que** la soupape anti-recul est intégrée dans l'amorce avec ou sans charge d'amplification (non représenté).

4. Soupape anti-recul selon l'une des revendications précédentes, **caractérisée en ce que** le ressort à membrane (5) est intégré de manière fonctionnelle dans le boîtier de la charge d'amplification (non représenté).
